# EUROPEAN PATENT APPLICATION

(11) **EP 1 107 586 A2**
(43) Date of publication of application: **13.06.2001**
(21) Application number: 00310614.3
(22) Date of filing: 30.11.2000
(51) Int. Cl.: H04N 5/445

(54) **Television receiver**

(30) Priority: 03.12.1999 JP 34456599; 28.07.2000 JP 2000229622
(71) Applicant: CANON KABUSHIKI KAISHA, Tokyo (JP)
(72) Inventor: Yui, Hideaki, Tokyo (JP); Aratani, Shuntaro, Tokyo (JP)
(74) Representative: Beresford, Keith Denis Lewis

(57) **Abstract**

A receiving apparatus includes: a receiver circuit for receiving a broadcasting signal in which information signals of a plurality of programs are multiplexed; a program information input circuit for inputting program information on a program selected from the plurality of programs, from an external apparatus; and a program table generating unit for generating a program table in accordance with the program information input to the program information input circuit and outputting data representative of the program table.

## Description

### BACKGROUND OF THE INVENTION

### Field of the Invention

The present invention relates to a television receiver, and more particularly to a processing of a TV broadcasting signal in which a plurality of programs are multiplexed.

### Related Background Art

Television broadcasting and satellite broadcasting of an analog system currently used in Japan provide only a small number of broadcast channels. It is therefore easy to select a channel which broadcasts a desired program.

More specifically, a user generally searches a desired program from a printed matter of a program table such as newspapers and magazines to select the channel which broadcasts the desired program, or a user obtains the channel number and broadcasting start time of a program which became a topic of conversation with friends or the like and selects that channel later at the home.

Satellite broadcasting of a digital system (digital broadcasting) adopts high efficiency compression coding techniques (MPEG2 standards) so that the number of channels increases greatly as compared to conventional analog broadcasting systems. Namely, a plurality of programs are multiplexed in one bit stream, and a plurality of such bit streams are transmitted, resulting in a large number of broadcasting programs.

It is not easier for a TV user than conventional analog broadcasting to select a desired program from a number of programs. In view of this, in the digital broadcasting, broadcasting stations transmit program data added with program information so that a user can select a desired program from a number of programs with ease.

The reception side separates the added program information from the received program data, and displays this program information on the screen as an electronic program guide (hereinafter written as EPG). A user can select a program by looking at this screen and sets the selected program by using a program selection unit to see the desired program.

A general digital broadcasting selecting method using EPG takes, however, too long a time to identity a desired program, because of a great number of channels of digital broadcasting. In order to solve this problem, an approach to displaying only those programs preferred by each user and filtered from a great number of channel programs has long been desired.

Conventionally proposed approaches to solving this problem include a limitative program selection method using program selection attributes (such as genre, players, audio-video restriction and charge limit), a method using a user interactive input unit to generate a knowledge database of user preference, user life pattern and the like and to select a most preferred program by using this database, and other methods.

Every and each of these conventional methods is targeted to active users who positively search preferred programs, and provide users of this type with a comfortable program selecting means.

Not only these active users, but also there are many passive users who desire to see to those programs recommended by friends having similar preference.

This case cannot be denied, from the viewpoint that media users are often influenced by hearsay of other users. Under such circumstances, a passive program selection approach different from an active program selection approach has long been desired in order to meet the requirements for simple and comfortable program selection by passive users.

In addition to such passive users, there are information supply type users who desire to provide their recommended programs by using a simple means not by using an oral approach. Such a recommended program providing means for current digital television receivers does not exist.

It is a concern of the invention to meet the above-described problems.

It is another concern of the present invention to allow a user to find a favorite program with ease.

It is still another concern of the present invention to allow a user to detect a desired program comfortably.

According to one aspect of the invention, there is provided a receiving apparatus comprising: receiving means for receiving a broadcasting signal in which information signals of a plurality of programs are multiplexed; information output means for outputting information of an information signal received by the receiving means; selecting means for selecting an arbitrary program from the plurality of programs; and transmitting means for transmitting program information of a program selected by the selecting means to an external apparatus.

Other advantages and features of the present invention will become apparent from the following detailed description of embodiments when read in conjunction with the accompanying drawings.

### BRIEF DESCRIPTION OF THE DRAWINGS

Fig. 1 is a block diagram showing the structure of a display system.

Fig. 2 is comprised of Figs. 2A and 2B are flow charts illustrating a process of exporting a recommended program.

Fig. 3 is a diagram showing an image illustrating a normal program selection process.

Fig. 4 is a diagram showing an image illustrating a recommended program direct selection process.

Fig. 5 is a diagram showing a direct program designation export format.

Fig. 6 is a diagram showing a retrieval condition designation export format.

Fig. 7 is a diagram showing an image of an import EPG selection screen.

Fig. 8 is comprised of Figs. 8A and 8B are flow charts illustrating a recommended program import process.

Fig. 9 is a flow chart illustrating an import process after compatibility check.

Fig. 10 is a diagram showing an image of a recommendation sort screen.

Fig. 11 is a diagram showing an image of a genre sort screen.

Fig. 12 is a diagram showing an image of a charge limit sort screen.

Fig. 13 is a diagram showing an image of an import EPG selection screen.

Fig. 14 is a flow chart illustrating a process of generating an import EPG screen.

Fig. 15 is a diagram showing an image of an import EPG screen.

Fig. 16 is a diagram showing an image of another import EPG screen.

Fig. 17 is a flow chart illustrating a process of generating an import EPG screen.

Fig. 18 is a diagram showing an image of another import EPG screen.

Fig. 19 is a diagram showing an image of another import EPG screen.

### DETAILED DESCRIPTION OF THE PREFERRED EMBODIMENTS

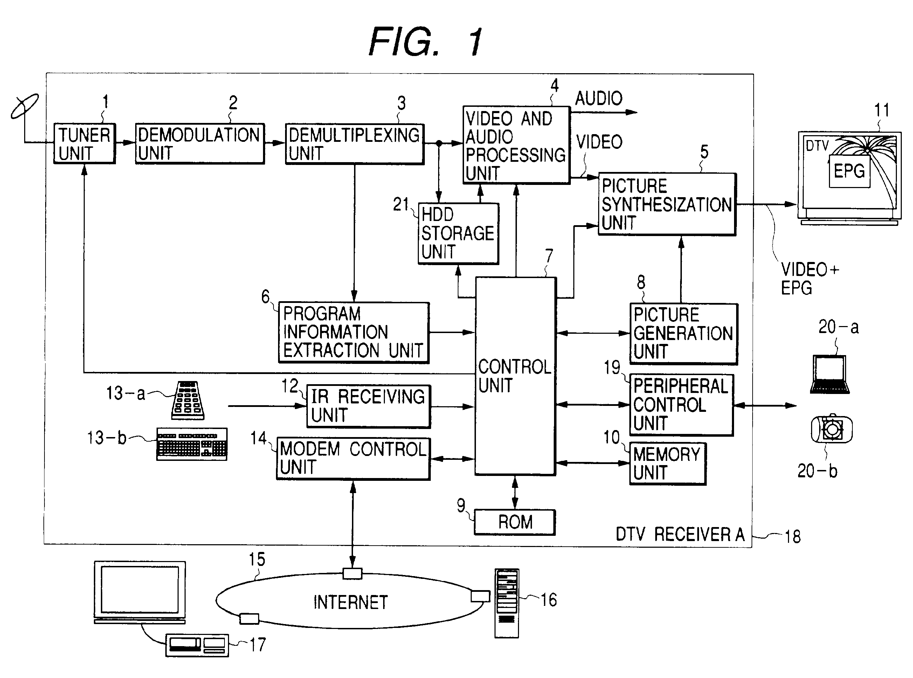

Fig. 1 is a block diagram showing the structure of a system according to an embodiment of the invention.

Each block in this system structure block diagram of Fig. 1 will be described first. A tuner unit 1 receives a signal of CATV, satellite broadcasting or digital broadcasting, selects (tunes in) a predetermined transmission channel from the reception data containing program information in accordance with a control signal supplied from a control unit 7 to be described later, and outputs the reception data of the selected transmission channel to a demodulation unit 2.

The demodulation unit 2 performs a demodulation process suitable for the broadcasting type of input reception data. For example, if digital data is to be demodulated, the demodulation unit 2 performs a digital demodulation process and then an error correction process to output the result to a demultiplexing unit 3. The demultiplexing unit 3 receives the signal output from the demodulation unit 2, and outputs a video signal, an audio signal and program information to a video and audio processing unit 4 and to a program information extraction unit 6.

The video and audio processing unit 4 performs a decode process for a video signal compressed by MPEG2. The decoded video signal is stored in a frame memory of a picture synthesization unit 5, the frame memory having a capacity capable of storing an image of one frame. The decoded audio signal is converted by a D/A converter into an analog audio signal which is supplied via an amplifier to a speaker to produce sounds.

The program information extraction unit 6 extracts program information added at the time of transmission from the output signal of the demultiplexing unit 3. In this case, program attribute data necessary for program selection is also extracted. The program information including the extracted attribute data is supplied to the control unit 7.

The program attribute data is attribute data of each program contained in a broadcasting signal. For example, the program attribute data includes genre information necessary for classifying programs into respective genres, program start/end time information, transmission channel information, information on broadcasting service type such as pay-per-view broadcasting, serial program information, information on program age limitation, and the like. If the transmitted broadcasting signal belongs to pay-per-view broadcasting, charge information may be added to the program in some cases.

The control unit 7 performs various processes in accordance with programs stored in a ROM 9. The control unit 7 may be made of only logical circuits, or may be a CPU or a media processor capable of parallel computation.

When an operation key of a remote commander 13-a or a keyboard 13-b is activated, an infrared ray signal is output from the remote commander 13-a or the keyboard 13-b and received by an IR receiving unit 12, and a reception result is supplied to the control unit 7.

The control unit 7 receives program attribute data output from the program information extraction unit 6 and stores it in a memory unit 10. Since program attribute data is transmitted at a predetermined period, the memory unit 10 always stores newest program attribute data.

In response to a drawing command from the control unit 7, a picture generation unit 8 develops data such as EPG screen data in the frame memory of the picture synthesization unit 5 by using an acceleration function such as BitBlt (bit block transfer) and DMA (direct memory access). BitBlt means a transfer of bit map data between a main memory and a graphics memory and between graphics memories.

ROM 9 stores character fonts if necessary, which fonts are used to develop character information on a screen. In accordance with a window management command from the control unit 7, the picture synthesization unit 5 reads display data from an internal memory while changing display addresses, properly synthesizes video data from the video and audio processing unit 4 and video data from the picture generation unit 8, and outputs the data representative of the synthesized image to a display device 11.

In response to a command from the control unit 7, the picture synthesization unit 5 selects either video data from the video and audio processing unit 4 or video data from the picture generation unit 8, and outputs the selected video data to the display device 11.

The display device 11 may be a flat panel (liquid crystal, plasma or the like) having a matrix electrode structure, a CRT, or any device which can display an image.

A modem control unit 14 can receive various network services such as two-way broadcasting service, electronic mail service, and WWW service. A peripheral control unit 19 allows the control unit 7 to communicate with external apparatus and may be a parallel port or a serial port such as RS-232C and IEEE 1394. With this peripheral control unit 19, a personal computer 20-a, a digital camera 20-b and the like can be connected to this system.

A DTV receiver A 18 constructed as above can be connected to the Internet 15 via the modem control unit 14 and to another DTV receiver B 17 omened by another user or to a WWW server 16 on the network.

A HDD storage unit 21 can store a transport stream (TS) having multiplexed audio and video data once demultiplexed by the demultiplexing unit 3. By reading the stored TS data and decoding it at the video and audio processing unit 4, functions such as delay reproduction, digest reproduction and time shift can be realized. These functions provided by the HDD storage unit 21 can be realized by the control unit 7 based on commands from the remote commander 13-a.

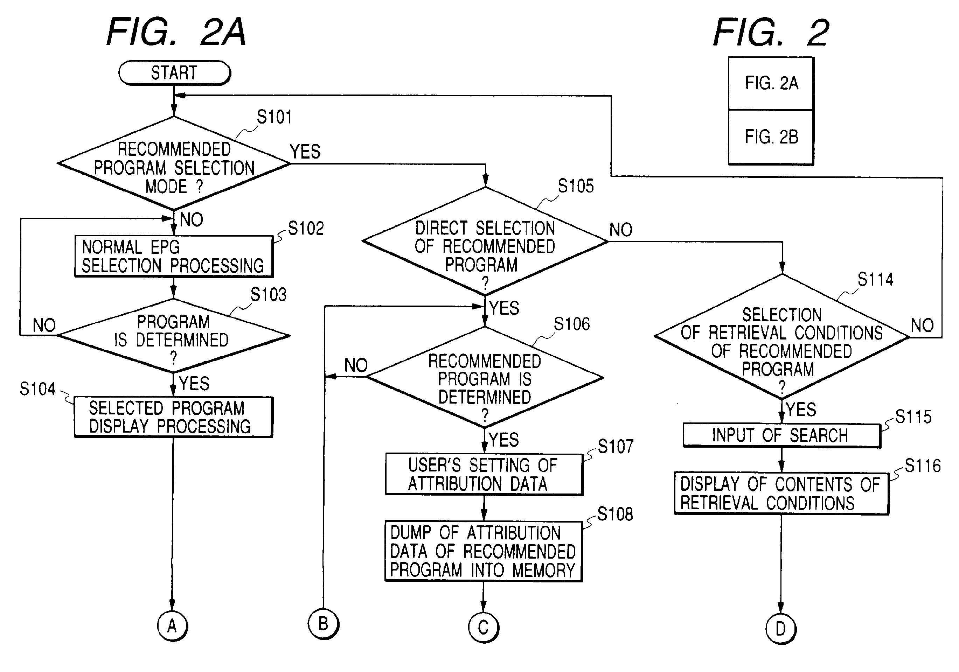

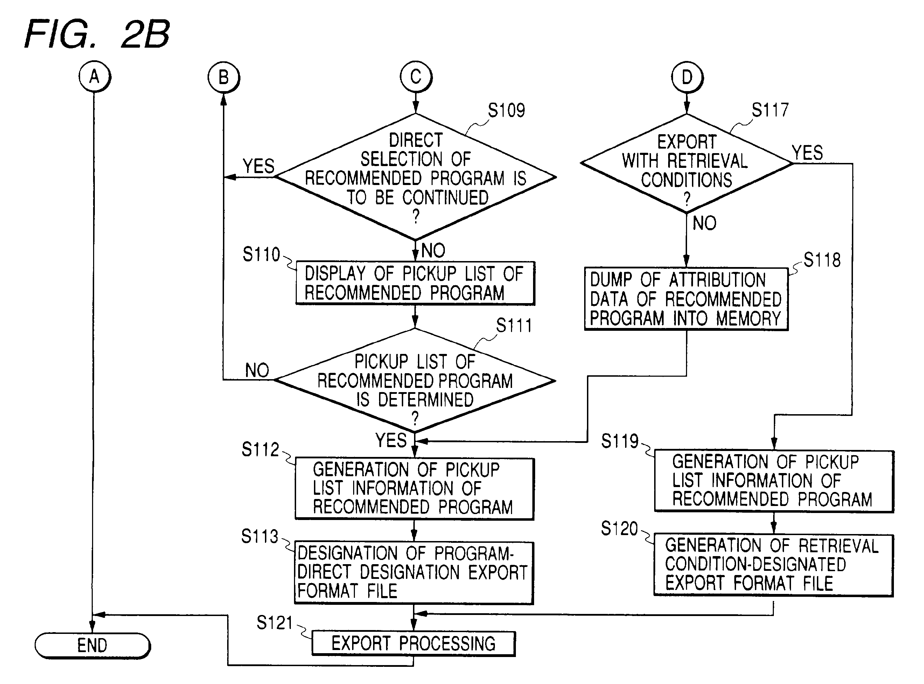

Next, the characteristic operation of the embodiment system constructed as above will be described with reference to the flow chart of Figs. 2A and 2B illustrating a recommended program export process. The process illustrated in Figs. 2A and 2B can be realized by controlling the circuits of DTV 18 by the control unit 7.

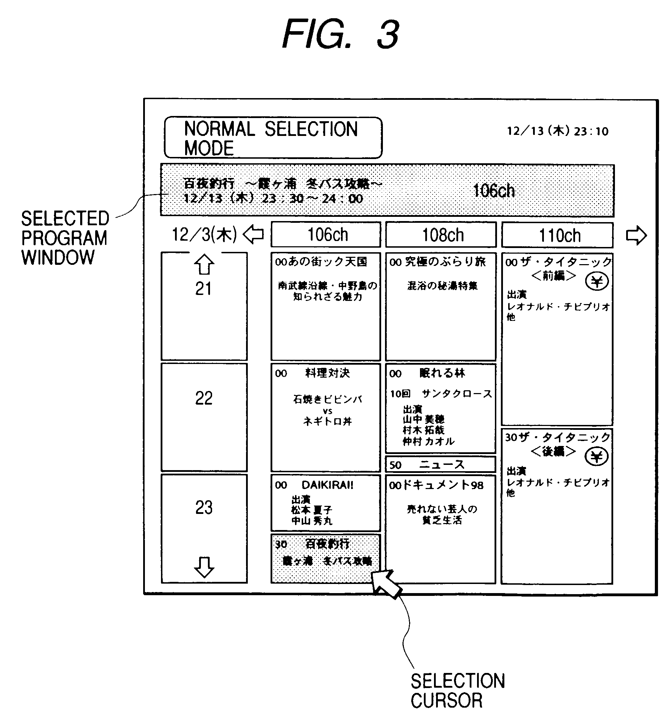

When a user depresses a normal program selection button (EPG button) of the remote commander 13-a at first Step S101, a normal selection process is executed at Step S102. In the normal selection process, the picture generation unit 8 generates an EPG screen such as shown in Fig. 3 as a normal program selection process image, and a selection cursor is used to select a favorite program from the EPG screen displayed on the display device 11.

A user moves a cursor to a desired program position on the EPG screen shown in Fig. 3, by using motion keys of the remote commander 13-a, and at Step S103 a program decision button of the remote commander 13-a is clicked so that the desired program selection can be designated. At Step S104, the control unit 7 makes the tuner unit 1 to perform a tuning control and an image display process of the selected program.

The normal program selection process has been described above. Next, means for notifying a favorite program selected by a user to another user will be described.

When a user selects a recommended program selection button of the remote commander 13-a at Step S101, the system enters a recommended program selection mode which is characteristic to this embodiment.

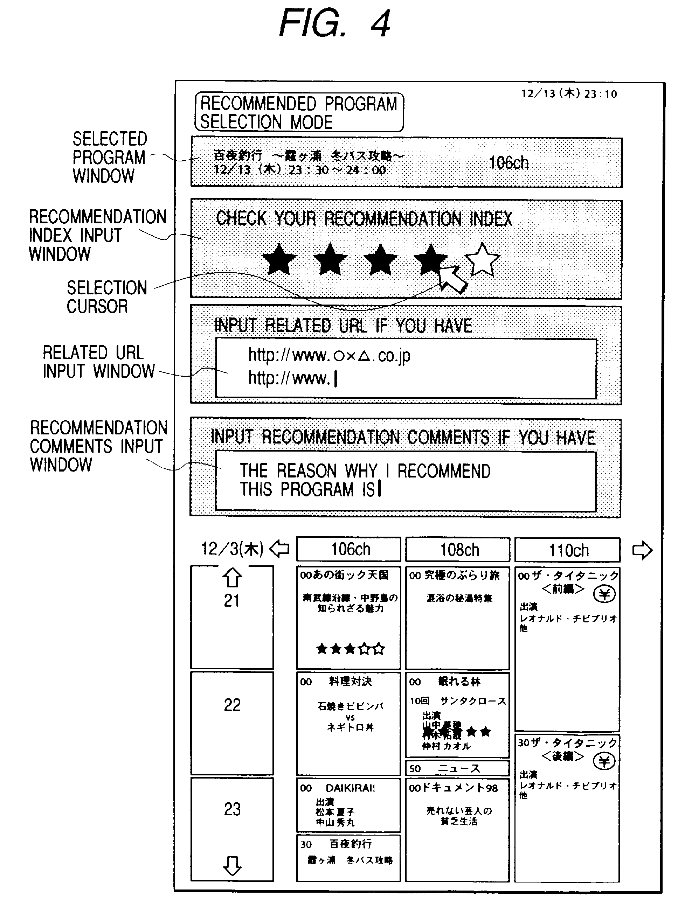

The user decides at Step S105 whether a recommended program selection method is directly selected on the EPG screen. If the direct selection is designated, as described earlier the picture generation unit 8 generates a recommended program selection process image such as shown in Fig. 4 and the selection cursor is used to designate recommended programs one after another on this EPG screen.

When the program decision button of the remote commander 13-1a is depressed at Step S106, a recommended program can be selected to thereafter follow Step S107. At Step S107, the program attribute data of the selected program transmitted from the broadcasting station is extracted and the user sets the attribute data. The attribute data of the recommended program is the data intentionally input by the user.

Specifically, a recommendation index input window such as shown in Fig. 4 is displayed to allow a user to input a recommendation index. Also, a related URL input window is displayed to allow a user to enter a URL related to the program as program reference information. Although the keyboard 13-b is used to directly write URL on the screen in Fig. 4, URL directly designated by a Web browser of the Internet may be reflected upon.

Furthermore, a recommendation comments input window is displayed to allow a user to add comments to the program information sent from the broadcasting station. The recommended program attribute data intentionally added by a user at Step S107 and the program attribute data extracted from the attribute data sent from the broadcasting station are stored at Step S108 in the memory unit 10 as the recommended attribute data of "user + broadcasting station".

Each Step from Steps S106 to S108 is repeated until all recommended programs are listed up. If the user judges at Step S109 that the recommended program direct selection is to be stopped, this effect is instructed by using the remote commander 13-a. At Step S110 the picture generation unit 8 generates a recommended program pickup list screen to display it on the display device 11.

A list of programs picked up by the user is displayed on the display device so that the user can delete the registered program or add a new program by using the pickup list. If the recommended program pickup list is not decided as Step S111, then at Steps S106 to S109, a recommended program can be added or the program attribute set by the user at Step S107 can be changed.

Namely, when it is instructed by the remote commander 13-a at Step S111 that the pickup list is changed, the control unit 7 outputs a control signal so that the picture generation unit 8 again generates a screen shown in Fig. 4 and displays it on the display device 11.

If the recommended program pickup list is decided at Step S111, the flow advances to Step S112 whereat recommended program pickup list information is generated. The pickup list information is addition information used for making another user who received the recommended program information briefly recognize who made up this pickup list information and what recommended programs were picked up.

Specifically, the control unit 7 controls the picture generation unit 8 to make it display the windows shown in Fig. 4 on the display device 11. The recommendation comments of the user who made up the recommended program pickup list are directly written in the window by using the keyboard 13-b.

In order to make another user easily confirm the user who made up the pickup list information, image icon data is generated. If the recommended program pickup list is to be passed to users well known by the list maker, it is effective if the control unit 6 operates to form image icon data from an image of the list maker picked up with the digital camera 20-b to image icon data.

If the recommended program pickup list is to be passed to a number of unknown users, it is effective to form a banner such as those used at personal home pages on the Internet by using the personal computer 20-a. The recommended program pickup list made up in this manner is stored in the memory unit 10.

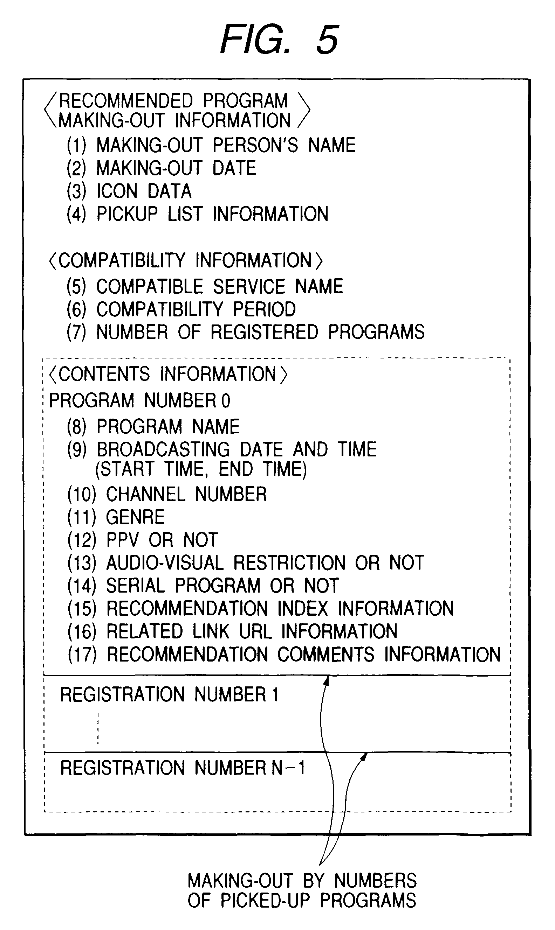

Next, at Step S113 a program direct selection export format file which collects all information described above is formed. The contents of this file are shown in Fig. 5 and contain mainly the following three categories of information.

These categories will be described briefly.
(1) Information on making-up person indicating the name of a person who selected recommended programs. If the system registers beforehand the names of making-up persons, the control unit 7 operates to automatically generate the making-up person information, whereas if the system does not register them, the user enters the making-up person information from the keyboard 13-b.
(2) Making-out date representative of the date when the recommended program was selected. The control unit 7 operates to automatically generate the making-out date by referring to a system timer.
(3) Icon data representative of the banner for the making-up person or a captured image generated at Step S112.
(4) Pickup list information representative of comments on the list contents entered by the making-up person at Step S112.

This category of (1) to (4) indicates the status when the recommended programs were selected.
(5) Compatible service name representative of the name of a broadcaster such as "Sky Perfect TV" which generated a recommended program. A user subscribing the service of this broadcaster can look at the recommended program. The control unit 7 automatically generates this name.
(6) Compatibility period of a picked-up recommended program. The control unit 7 operates to check the date and the start and end times of the picked-up recommended program and automatically generate the compatibility period.
(7) The number of registered programs representative of the number of picked-up recommended programs. The control unit 7 operates to check the number of picked-up programs and automatically generate it.

This category of (5) to (7) indicates the compatibility status of each recommended program. The following category relates to the contents of each program contained in the recommended program information.
(8) Program name.
(9) Broadcasting date and time (start time, end time).
(10) Channel number.
(11) Genre.
(12) PPV (pay-per-view) or not.
(13) Audio-visual restriction or not.
(14) serial program or not.

The data of (10) to (14) is automatically generated under the control of the control unit 7 by using the program attribute data of each program selected at Step S106 among the program attribute data extracted by the program information extraction unit 6.
(15) Recommendation index information entered at Step S107 by the user from the recommendation index input window shown in Fig. 4.
(16) Related link URL information entered at Step S107 by the user from the related URL input window shown in Fig. 4.
(17) Recommendation comments information entered at Step S107 by the user from the recommended comments input window shown in Fig. 4.

The data of (15) to (17) is added by the user as new attributes when the user selects each recommended program, and is characteristic to this embodiment. Such contents data set is formed as many as the number of picked-up registration programs in (7).

The data (1) to (17) in the program direct designation export format file is defined to be described together with an identification tag in order for a file destination to easily discriminate between these data items (1) to (17). The recommended program direct selection method by a user has been described above.

Next, the operation to be executed when it is judged at Step S105 that the direct selection on the EPG screen is not used.

In this case, it is judged at Step S114 whether recommended program retrieval conditions are selected. When a retrieval conditions selection is instructed from the remote commander 13-a, the control unit 7 outputs a control signal to make the picture generation unit 8 generate a retrieval condition input screen, and thereafter a retrieval condition is input at Step S115.

In this embodiment, a user designates a logical operation formula of all broadcasting parameters capable of being extracted such as genre and players. In accordance with the designated logical operation formula, broadcasting programs are filtered. The retrieval conditions are input from the remote commander 13-a or keyboard 13-b. A retrieval method similar to those used in the Internet can be used.

At Step S116, in accordance with the retrieval conditions, the picture generation unit 8 generates a screen showing filtered results and displays it on the display device 11. If a user determines at Step S117 that the retrieved contents are satisfactory, it is determined whether the recommended programs under the retrieval conditions are to be output.

If it is determined that the recommended programs under the retrieval conditions are not to be output (e.g., since the programs to be detected under the retrieval conditions may change with a retrieved day, only the programs detected at the present time are intended to be output as recommended programs), the flow advances to Step S118 whereat attribute data of each program detected under the retrieval conditions is selected from the program attribute data extracted by the program information extraction unit 6 and stored in the memory unit 10.

Thereafter, the processes similar to those at Steps S112 and S113 are performed. A different point from the above-described processes is that the user does not add new attributes of (15) to (17) shown in the file of Fig. 5.

It the user determines at Step S117 that the program detected under the retrieval conditions are intended to be output and this effect is instructed from the remote commander 13-a, recommended program pickup list information is generated at Step S119. This operation is similar to Step S112.

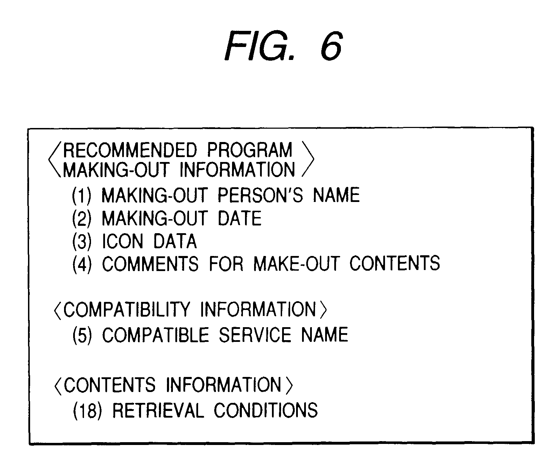

Next, at Step S120 a retrieval condition designation export format file is formed. The contents of this file are shown in Fig. 6. The contents include mainly three categories. The data items (1) to (5) are generated in the similar manner to forming the file shown in Fig. 5. A different point from the file shown in Fig. 5 is that the contents of the file are described under the retrieval conditions (18).

The data items (1) to (5) and (18) in the retrieval condition designation export format file are defined to be described together with an identification tag in order for a file destination to easily discriminate between these data items. The recommended program retrieval condition selection method by a user has been described above.

The two files generated in the above manner are output at Step S121. This output process may be performed in the following manners.

First, each file is output from a WWW browser pre-installed in the control unit 7 to the WWW server 16 via the modem control unit 14 and registered in a user home page preset to the WWW server 16. In this manner, new services can be realized which can transmit recommended programs selected by the user to a number of unknown users.

Second, each file is transmitted as a file attached file to a mail from the modem control unit 14 by using electronic mail software pre-installed in the control unit 7 and designating a destination address. For example, the file is transmitted from DTV 18 to DTV 17 by designating the address of DTV 17. In this manner, a new function can be realized which can transmit recommended programs selected by the user to a particular user. This function can be realized by using the Internet and a cellar phone.

Third, each file is stored in an external recording medium, such as a memory card and a magnetooptical disc, connected to the peripheral control unit 19 and the user hands it over to another user.

With the third method, the user can go out with the medium storing the recommended program data in hands or directly hands it over to friends.

Next, a process of receiving the recommended program information supplied from DTV 18 at DTV 17 and selecting each program will be described. The structure of DTV 17 is similar to that of DTV 18. The operation is therefore described with reference to the block diagram shown in Fig. 1.

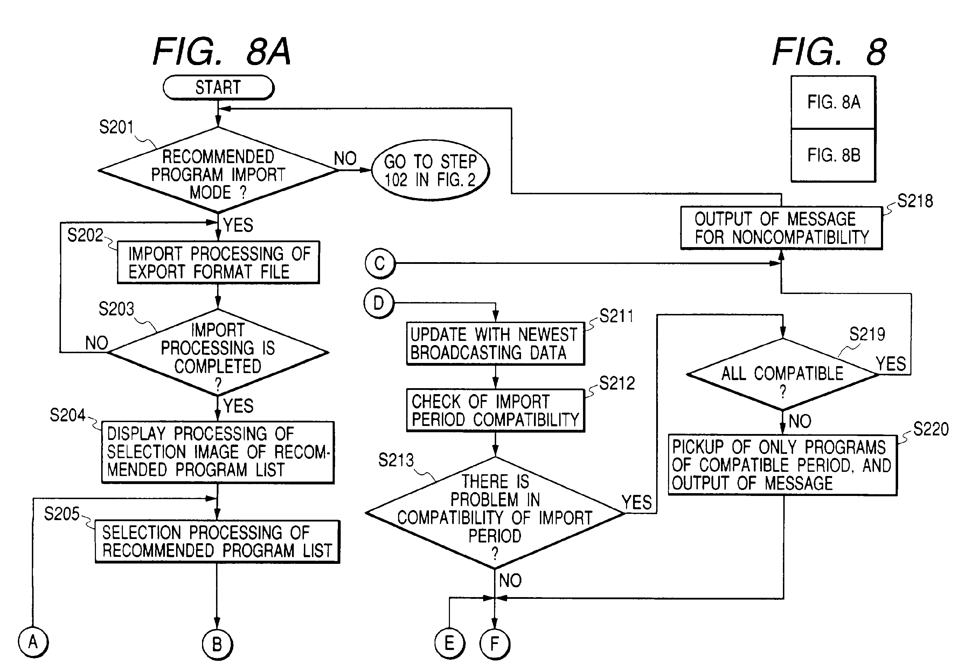

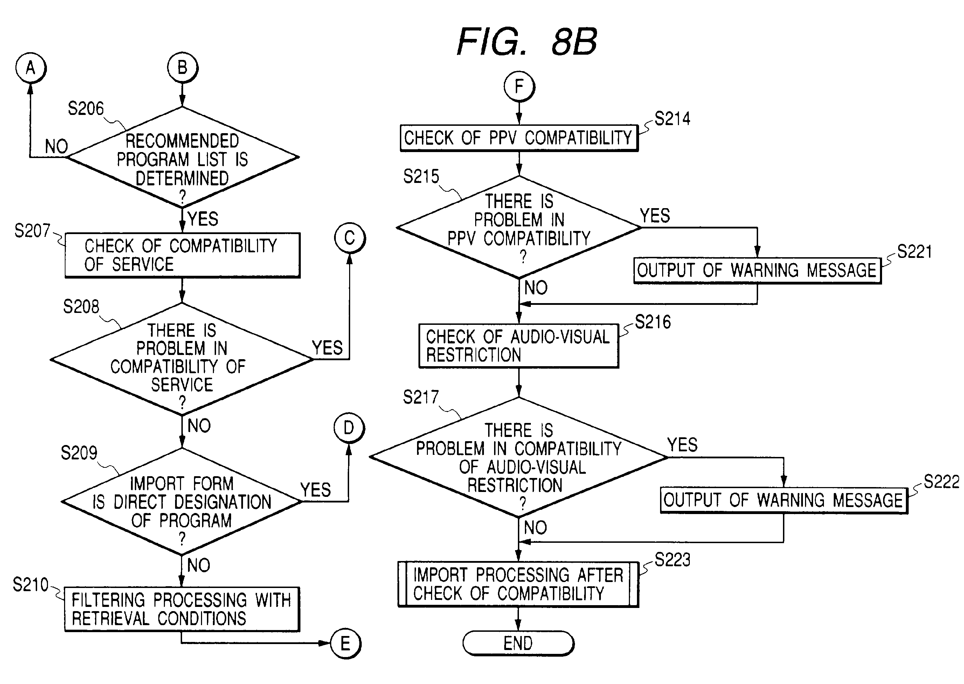

Figs. 8A and 8B are flow charts illustrating the control operation to be executed by the control unit 7 when a program is selected by using the received recommended program information.

First at Step S201, it is checked whether the user instructs a recommended program reception mode from the remote commander 13-a. If not, the control unit 7 judges that the mode is the normal program selection mode, and performs a normal program selection mode at Step S102 to following Steps shown in Figs. 2A and 2B.

If the user selects at Step S201 the recommended program reception mode, a process of receiving an export format file at Step S202 is executed which is characteristic to this embodiment.

The user acquires the export file and then supplies it to its system. Two methods of acquiring the export file are conceivable.

One method is to acquire the export file from the home page, preset to the WWW server 16, of the user who recommended programs, by using a WWW browser pre-installed in the control unit 7 and accessing the WWW server 16 via the modem control unit 14.

Another method is to acquire the export file as a file attached to a mail from user (DTV) who output an export file, via the modem control unit 14 by using electronic mail software pre-installed in the control unit 7.

In each of the methods, the control unit 7 operates to write the received export file in the memory unit 10. This process continues until the user confirms at Step S203 a completion of the reception process, because there is a possibility that one or more export format files are acquired.

After one or more export files are acquired by one of the above-described acquiring methods and stored in the memory unit 10 and when the user instructs to display the recommended program list, at Step S204 a recommended program list selection screen is generated from one or more export format files and displayed on the display device 11.

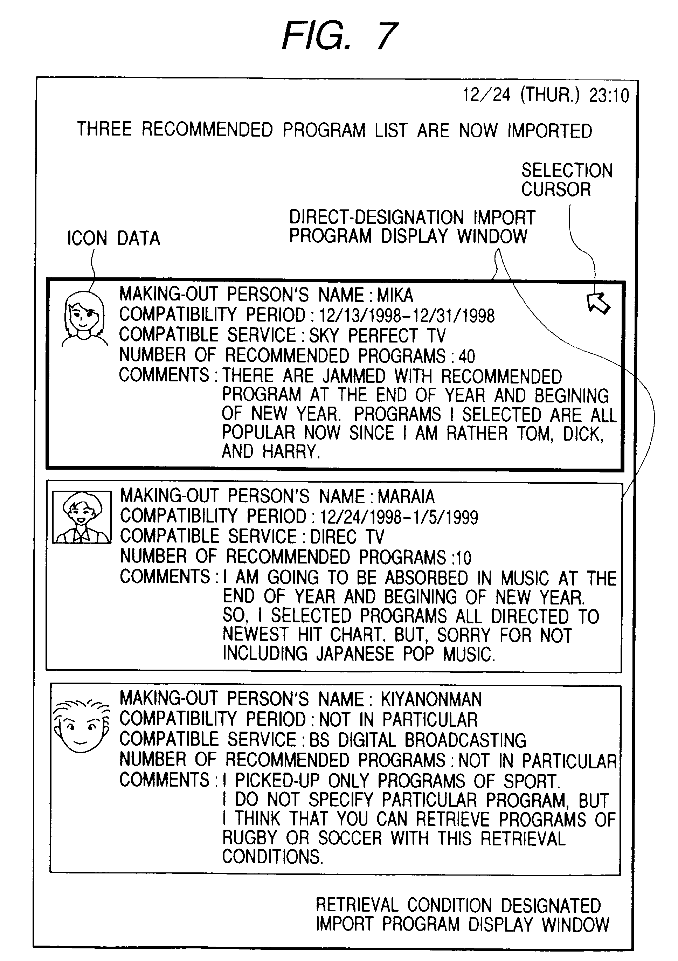

Fig. 7 shows an example of the recommended program list selection screen.

Upon reception of a recommended program list display instruction, the control unit 7 operates to read export format lists shown in Figs. 5 and 6 from the memory unit 10 and make the picture generation unit 8 generate the recommended program list selection screen.

Specifically, if the file read from the memory 10 is a program direct selection designation export format file, direct designation import program display windows (in the example shown in Fig. 7, two windows) are generated, whereas if the file is a search condition designation export format file, a search condition designation import program display window (in the example shown in Fig. 7, one window) is generated. These windows are displayed on the same display screen.

At the same time when these windows are displayed, the number of received recommended program lists is also displayed. The contents of each window are constituted of icon data, the name of a making-up person, a compatibility period, the number of recommended program lists, and comments. In order to display the recommended program list selection screen having the layout shown in Fig. 7, the control unit 7 checks the identification tags for the data items in the export format file shown in Figs. 5 and 6, such as (1) making-up person name, (3) icon data, (4) pickup list information, (5) compatible service name, (6) compatibility period, and (7) the number of registered programs, and then issues a drawing command to the picture generation unit 8.

The identification tags for (6) compatibility period and (7) the number of registered programs are not defined for the search condition designation export format file so that the contents thereof are not displayed in the window.

At Step S206, the user looks at this screen and selects a desired recommended program from the recommended program list selection screen by using the selection cursor. After the recommended program list is decided at Step S206, the flow advances to Step S207 and following Steps whereat system compatibility of each imported recommended program list is checked.

At Step S207 service compatibility is checked. The control unit 7 checks whether the service written in the identification tag <(5) compatibility service name> in the export format file of the recommended program selected at Step S206 is compatible with the broadcasting service usable by DTV 17.

If it is judged at Step S208 that there is a problem in service compatibility, then at Step S218 a incompatibility message is output. For example, if the imported recommended program is compatible with "Direct TV" although the broadcasting service usable at DTV 17 is "Sky Perfect TV", then the selection of this recommended program list is meaningless. In this case, this effect is notified to the user on the screen of the display device to suggest the user to select another recommended program list.

If it is judged at Step S208 that there is no problem in service compatibility, the flow advances to Step S209 whereat the form of the designated recommended program list is checked. If it is judged that the list form is the program direct selection form, the flow advances to Step S211 whereat the program information is renewed to the latest program information.

Specifically, the control unit 7 compares the contents described in the tags <(9) broadcasting date and time> of all programs registered in the recommended program list with the latest program attribute data obtained by the program information extraction unit 6. If there is any time shift to be made, for example, by a prolongation of a baseball relay broadcast, the program information is updated.

Next, at Step S212 compatibility of the import period is checked. Namely, it is checked whether the compatibility period described in the discrimination tag <(6) compatibility period> is compatible with the current date and time at DTV 17.

Specifically, it there is even one recommended program whose compatibility period was expired, it is judged at Step S213 that there is a problem in the import period, and the flow advances to Step S219. If all the recommended programs are judged as incompatibility (all the recommended programs were already broadcast), an incompatibility message is output at Step S218. This effect is notified to the user on the screen of the display device to suggest the user to select another recommended program list.

If it is judged at Step S219 that only some recommended programs were already broadcast, the flow advances to Step S220 whereat a message is displayed on the screen, indicating that the recommended programs only in the compatible period are picked up and the other recommended programs are not displayed.

In this case and the case that it is judged at Step S213 that there is no problem in compatibility of the import period (the recommended program is not still broadcast), then the flow advances to Step S214 whereat PPV compatibility is checked.

At this Step S214, the control unit 7 compares the contents described in the identification tags <(12) PPV or not) of all picked-up and registered recommended programs with the current PPV contract state of the user. If there is even one recommended program without a PPV contract, it is judged at Step S215 that there is a problem in compatibility, to thereafter follow Step S221.

At Step S221, programs which cannot be looked at and listened to because of no PPV contract are listed up from the recommended programs, and a warning message is displayed to the user.

In this case and the case that it is judged at Step S215 that there is no problem in PPV compatibility (the user already made the PPV contract for all PPV programs in the recommended programs, or the recommended programs do not include PPV programs), the flow advances to Step S216 whereat compatibility of audio-visual restriction is checked.

At Step S216 the control unit 7 compares the contents described in the identification tags <(13) audio-visual restriction or not> of all the picked-up and registered programs with the present registered age of the user. If there is even one program under the audio-visual restriction because of the present user age recognized by the system, it is judged at Step S217 that there is a problem in compatibility of audio-visual restriction, and the flow advances to Step S222.

At Step S222 programs which cannot be looked at and listened to because of the user age are listed up from the recommended programs, and a warning message is displayed to the user. In this case and the case that it is judged at Step S217 that there is no problem in compatibility of audio-visual restriction, the flow advances to Step S223 whereat an import process after the compatibility check is performed.

The compatibility check relative to audio-video data stored in the HDD storage unit 21, can be performed in addition to the received program data.

The processes at Steps S211 to S223 are performed when the recommended program list selected at Step S209 is of the program direct designation form. If it is judged at Step S209 that the program list selected at Step S209 is of the search condition designation form, the flow advances to Step S210 whereat a filter process using the retrieval conditions is performed.

Specifically, only the programs satisfying the search conditions described in the received recommended program list are retrieved and extracted by using the latest program information extracted by the program information extraction unit 6, and stored in the memory unit 10.

This filter process does not constitute the main feature of this embodiment so that the details thereof are not given herein. After Step S210, the flow jumps to Step S214. The processes at Step S214 and following Steps (to Step S223) are similar to those for the above-described program direct designation form.

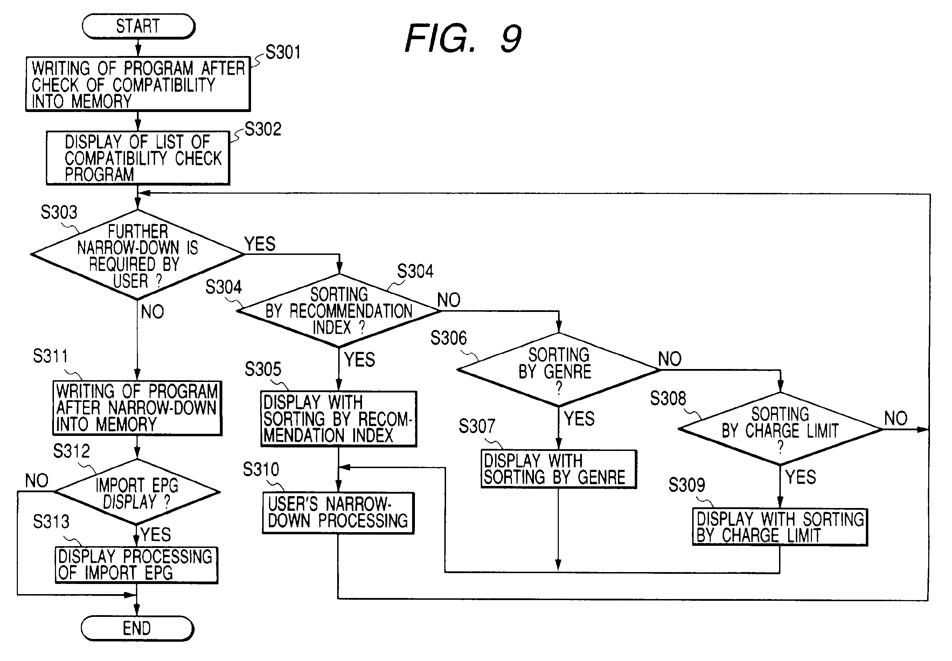

The import process at Step S223 after the compatibility check will be detailed with reference to the flow chart of Fig. 9 illustrating the import process after the compatibility check.

At Step S301 the program list passed the compatibility check is stored in the memory unit 10. Next, at Step S302 a list of programs passed the compatibility check and sorted in the date ascending order is displayed on the display screen.

The user looks at this displayed list and if the user wants to select all recommended programs listed up at Step S303, then the flow advances to Step S311, whereas if the user wants to further narrow down the programs, the flow advances to Step S304 and following Steps to enter a narrow-down support mode using the sorted picked-up programs.

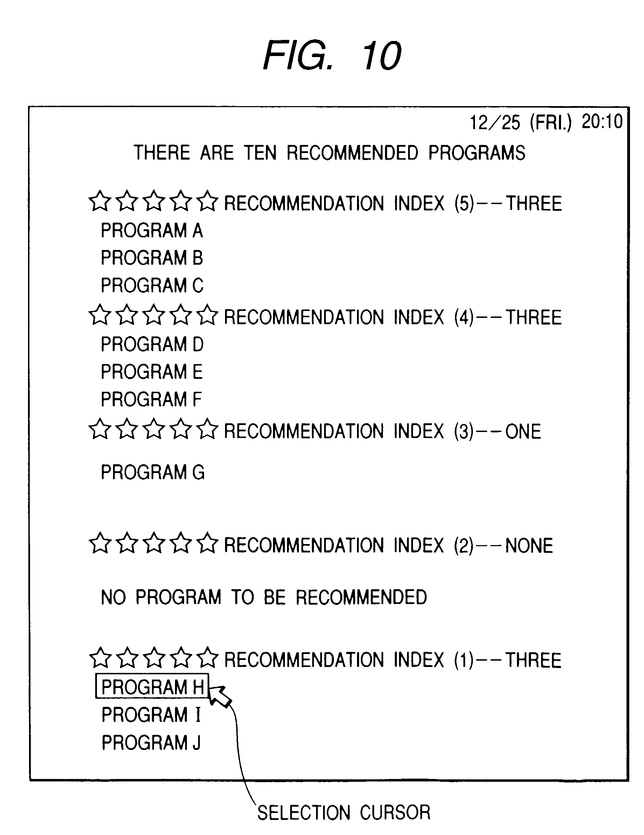

If a recommendation index sort is selected at Step S304, then at Step S305 the control unit 7 operates to read the picked-up data from the memory unit 10 and display a recommendation sort screen shown in Fig. 10 by referring to the recommendation index (in this embodiment, five-step evaluation) described in the identification tag <(15) recommendation index information> added when the user entered the recommendation index during the export file formation.

This recommendation index sort screen can be displayed only if it is judged at Step S209 that the import form is the program direct designation form, and Step S305 is neglected if the import formed is judged as the retrieval condition designation form.

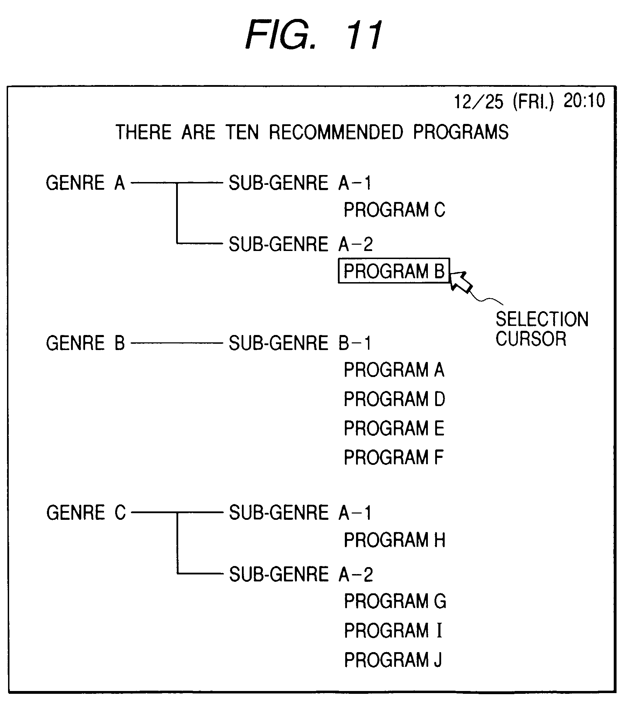

If a genre sort is selected at Step S306, the flow advances to Step S307 whereat the control unit 7 operates to read picked-up data from the memory unit 10 and display a genre sort screen shown in Fig. 11 by referring to the genre contents described in the identification tag <(11) genre> automatically added by using the received data during the export file formation.

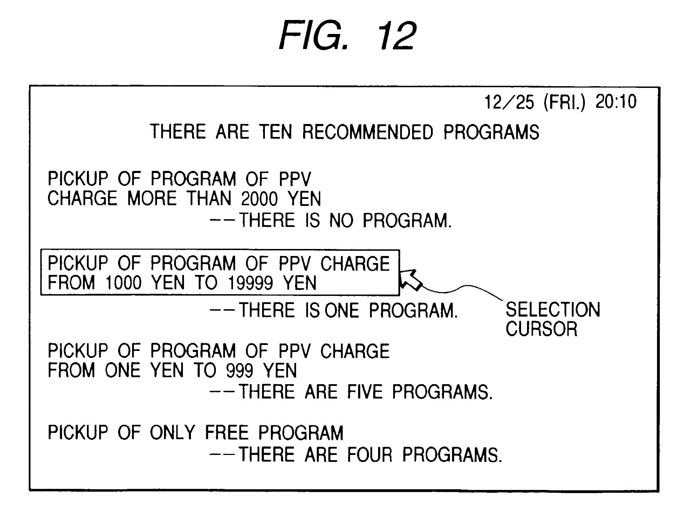

If a charge limit sort is selected at Step S308, the flow advances to Step S309 whereat the control unit 7 operates to read picked-up data from the memory unit 10 and display a charge limit sort screen shown in Fig. 12 by referring to the PPV contents (a charge or the like of a PPV program) described in the identification tag <(12) PPV or not> automatically added by using the received data during the export file formation.

After each of Steps S305, S307 and S309, at Step S310 while looking at the screen, the user can instruct a deletion of a recommended program (program group) not desired, by using a selection cursor shown in Figs. 10 to 12 on the displayed sort screen. The program to be deleted is also deleted from the memory unit 10.

This narrow-down process continues until the user judges at Step S303 that the narrow-down process is not necessary. In this embodiment, a combination of these three sort patterns may also be used for the narrow-down process.

If the user judges at Step S303 that the narrow-down process is not necessary, the flow advances to Step S311 whereat the final narrowed-down program list is stored in the memory unit 10.

If the user instructs at Step S312 an import EPG screen display using the narrowed-down list, the flow advances to Step S313 whereat the control unit 7 reads the final narrowed-down programs from the memory unit 10.

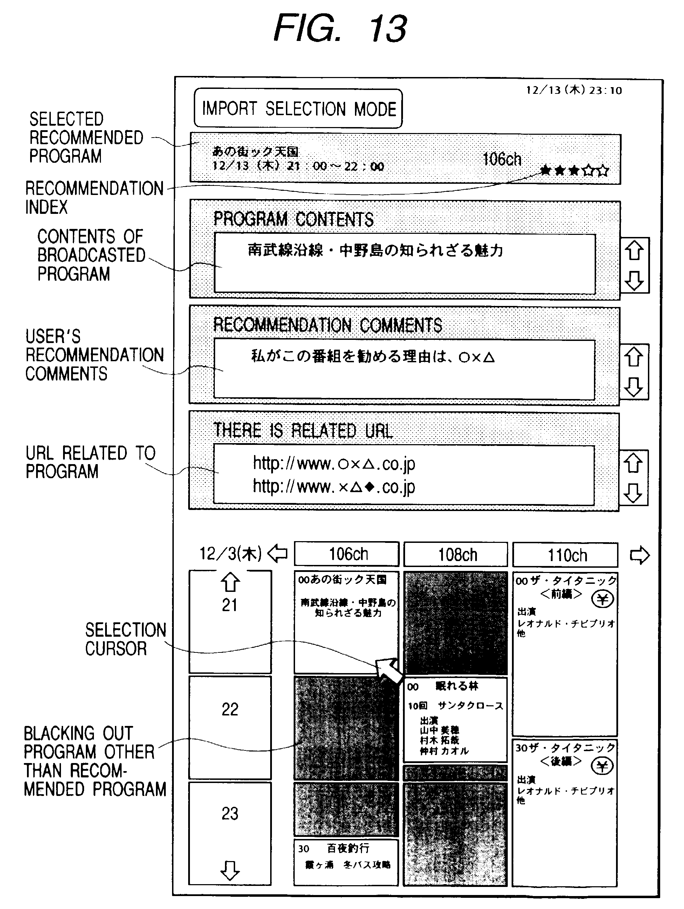

In accordance with the narrowed-down program data and the program data extracted by the program information extraction unit 6, the picture generation unit 8 generates an import EPG screen such as shown in Fig. 13 which is displayed on the display device 11. A main difference of the screen shown in Fig. 13 from the normal EPG screen resides in that programs other than the recommended programs are blacked out and are not displayed.

Another difference resides in that user program information such as a recommendation index, a URL related to the program and user recommendation comments is mixed to the received program data. Such user information can be displayed through recognition, by the control unit 7, of the identification tags for (15) recommendation tag information, (16) related link URL and (17) recommendation comments in the export format file shown in Fig. 5.

Such user information is not displayed if the import form is the retrieval condition designation form. On this import EPG screen, the user can select a desired program by moving the cursor to the desired program position by using the motion keys of the remote commander 13-a and by clicking the program decision button of the remote commander 13-a. The control unit 7 then operates to make the tuner unit 1 tune in the station so that the desired program is displayed.

As described above, according to this embodiment, a program can be selected from the recommended program information made by and received from another user. It is therefore possible to easily select a favorite program of the user. Further, a program is selected by considering the state of DTV of a user, e.g., receivable broadcasting service, and the state of DTV of another user. It is therefore possible to exclude unnecessary programs and comfortably select a desired program.

In this embodiment, programs other than recommended programs are blacked out on the EPG screen. Some users desire an EPG screen allowing to look at the normal EPG screen and at the same time the recommended program information.

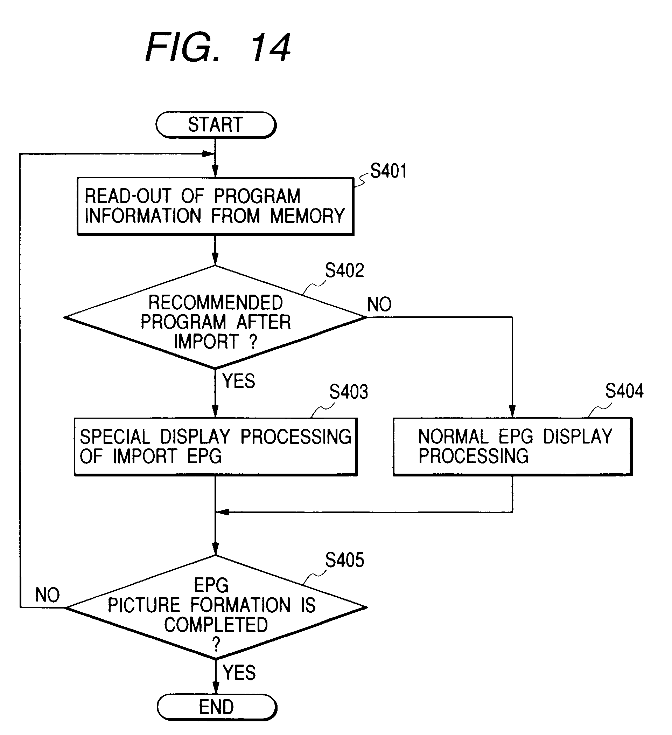

In the second embodiment, program information extracted from broadcasting signals and externally received recommended program information are displayed on the same screen. A process of generating an EPG screen of this embodiment will be described with reference to the flow chart shown in Fig. 14.

Fig. 14 is a flow chart illustrating the EPG screen display process to be executed by the control unit 7 according to the embodiment. The process illustrated in this flow chart is executed when an import EPG screen display instruction is issued at Step S313 shown in Fig. 9.

First at Step S401, the control unit 7 operates to read program information from the memory unit 10. This program information was extracted from the received broadcasting signal by the program information extraction unit 6 and stored in the memory unit 10.

Next at Step S402, programs same as the recommended programs obtained by the process illustrated in the flow chart of Fig. 9 are retrieved from the programs described in the read program information.

If there is no coincident program at Step S402, a normal EPG screen is displayed at Step S404.

If there is a coincident program at Step S402, the flow advances to Step S403 whereat a special EPG screen is displayed distinctively and clearly showing the recommended programs.

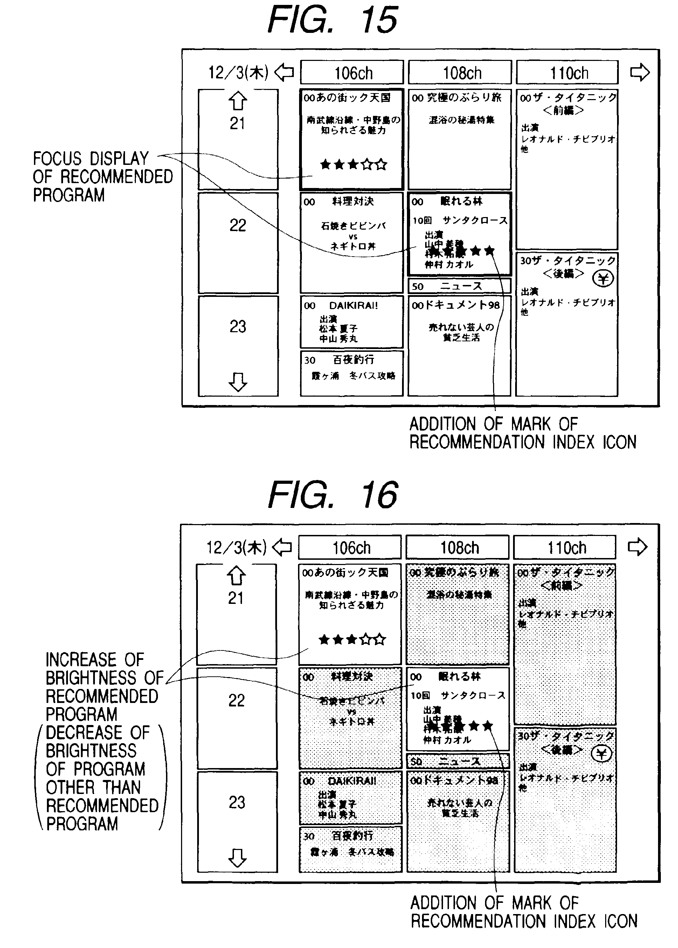

Such a special EPG screen may be a screen shown in Fig. 15 wherein only recommended programs are displayed with a focus frame and icons representative of the recommendation indices described in the recommended program list generated and multiplexed with the program information in the recommended program areas. With this special EPG screen, a user can be supplied with a wide range of program selection information.

Another example of a special EPG screen is shown in Fig. 16 wherein only recommended programs are displayed brighter than other programs. Also in this case, icons representative of the recommendation indices of the recommended programs are multiplexed with the program information in the recommended program areas.

In this embodiment, recommended program information and other program information are displayed on the same EPG screen by using the program information presently received and the program information obtained by the import process. It is not necessary to switch between the recommended program EPG screen and normal EPG screen. It is therefore very easy for a user to select a program.

Next, the third embodiment will be described.

In the second embodiment, program information extracted from the broadcasting signal and recommended program information externally received are displayed on the same EPG screen. In contrast, in the third embodiment, program information selected by a user or program information selected by retrieval conditions, and recommended program information, are displayed on the same EPG screen.

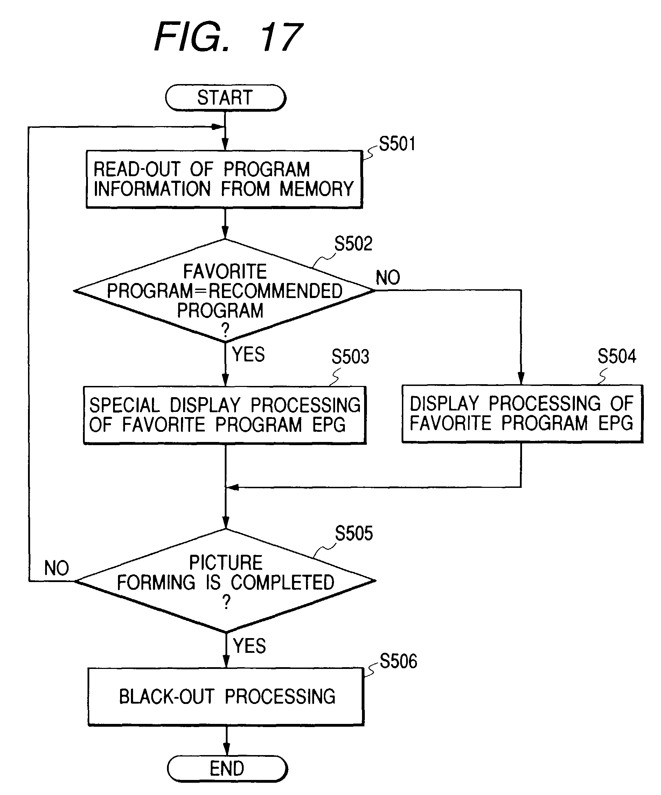

The process of generating an EPG screen of this embodiment will be described with reference to the flow chart of Fig. 17.

Fig. 17 is a flow chart illustrating the process of generating and displaying an EPG screen to be executed by the control unit 7 according to the embodiment. Similar to the second embodiment, the process illustrated in this flow chart is executed when an import EPG screen display instruction is issued at Step S313 shown in Fig. 9.

First at Step S501, the control unit 7 operates to read program information from the memory unit 10. This program information is favorite program information which was selected, as described with reference to the flow chart of Figs. 2A and 2B, by the recommended program direct selection or recommended program retrieval condition selection, filtered in the system and stored in the memory unit 10.

Next at Step S502, it is checked whether each program contained in the read program information is coincide with each of the recommended programs narrowed-down at illustrated in Fig. 9. If coincident, a special EPG screen generating process is executed at Step S503. With this process, icons representative of recommendation indices are added and the display brightness is increased.

If not coincident at Step S502, it is judged that the program is a simple favorite program, and a favorite EPG screen generating process is executed at Step S504. With this process, the favorite program is displayed at a low brightness.

If it is judged at Step S505 that the processes for all favorite programs stored in the memory unit 10 are completed, then at Step S506 the program areas other than for those of the recommended and favorite programs are blacked out and a final EPG screen is generated and displayed by using the program information extracted from the program information extraction unit 6.

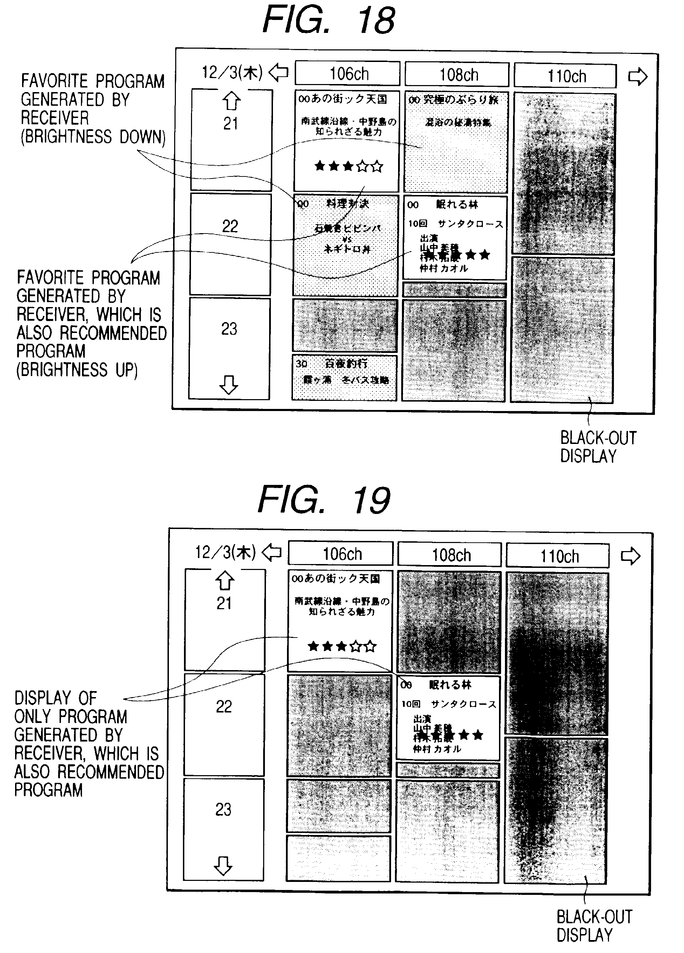

An example of the EPG screen of this embodiment is shown in Fig. 18.

As shown, the EPG screen is formed in such a manner that the favorite programs coincident with the externally received recommended programs can be definitely and clearly discriminated. It is therefore possible to give a priority to user selected favorite programs and make easy to further narrow down the selected programs.

In the process illustrated in Fig. 17, Step S504 may be omitted to display an EPG screen showing only the favorite programs coincident with the recommended programs, as shown in Fig. 19.

The invention is also applicable to a system having a plurality of apparatuses (e.g., a host computer, an interface apparatus, a reader, a printer and the like) or to a single apparatus.

The scope of the invention contains also the case wherein software program codes realizing the function of each embodiment described above are supplied to a computer (CPU or MPU) of the apparatus or system connected to various devices realizing the embodiment function, and the computer operates the devices in accordance with the stored programs.

In this case, the software program codes themselves realize the embodiment function. Therefore, the program codes themselves and means for supplying the program codes, e.g., a storage medium storing the program codes, constitute the present invention. The storage medium for storing such program codes may be a floppy disk, a hard disk, an optical disk, a magnetooptical disk, a CD-ROM, a magnetic tape, a nonvolatile memory card, a ROM or the like.

It is obvious that the program codes are included in the embodiment of the invention, wherein not only the computer executes the supplied program codes to realize the embodiment function but also the program codes in cooperation with an OS (operating system) running on the computer or with another application or the like realize the embodiment function.

It is obvious that the scope of the invention also contains the case wherein the functions of each embodiment can be realized by writing the program codes into a memory of a function expansion board inserted into a computer or of a function expansion unit connected to the computer, and thereafter by executing a portion or the whole of actual processes by a CPU of the function expansion board or function expansion unit.

According to each embodiment of the invention described above, even if the number of programs of a digital television increases, TV programs recommended by a user can be easily supplied to a number of unknown other users. It is easy to select a desired program from a plurality of received channels and tune in the program.

Programs recommended by users having a common preference can be looked with ease without performing a complicated work by a user of positively searching a preferred program. Requirements for a simple and comfortable tuning by users, particularly passive users, can be met.

It is therefore possible to easily select a program desired by a user from a number of programs.

Many widely different embodiments of the present invention may be constructed without departing from the spirit and scope of the present invention. It should be understood that the present invention is not limited to the specific embodiments described in the specification, except as defined in the appended claims.

## Claims

1. A receiving apparatus comprising:
receiving means for receiving a broadcasting signal in which information signals of a plurality of programs are multiplexed;
information output means for outputting information of an information signal received by said receiving means;
selecting means for selecting an arbitrary program from the plurality of programs; and
transmitting means for transmitting program information of a program selected by said selecting means to an external apparatus.

2. A receiving apparatus according to claim 1, wherein the broadcasting signal is further multiplexed with program attribute data of the plurality of programs, and said transmitting means includes program information generating means for generating the program information by using the program attribute data of a program selected by said selecting means.

3. A receiving apparatus according to claim 2, further comprising program table generating means for generating a program table by using the program attribute data, and said selecting means selects an arbitrary program from a plurality of programs contained in the program list.

4. A receiving apparatus according to claim 1, further comprising information inputting means for inputting arbitrary comment information of a program selected by said selecting means, and said transmitting means includes program information generating means for generating the program information by using the comment information.

5. A receiving apparatus according to claim 1, wherein said selecting means searches the plurality of programs in accordance with a predetermined retrieval condition and selects a program in accordance with a search result.

6. A receiving apparatus comprising:
receiving means for receiving a broadcasting signal in which video signals and program information signals of a plurality of programs are multiplexed;
video signal processing means for processing the video signal of a program selected from the plurality of programs and outputting the processed video signal to a display device;
program information extracting means for extracting program information from the broadcasting signal received by said receiving means;
program table generating means for generating a program table in accordance with the program information extracted by said program information extracting means and outputting data representative of the program table to the display device;
selecting means for selecting an arbitrary recommended program from programs described in the program table;
file generating means for generating an output file of the recommended program selected by said selecting means by using the program information of the recommended program among the program information extracted by said program information extracting means; and
transmitting means for transmitting the output file of the recommended program generated by said file generating means to an external apparatus.

7. A receiving apparatus according to claim 6, wherein the output file of the recommended program includes a plurality of information items, and said file generating means generates an identification tag of each of the plurality of information items.

8. A receiving apparatus according to claim 7, wherein the information item includes information representative of a recommendation index of each program.

9. A receiving apparatus according to claim 7, wherein the information item includes information representative of a make-up person of the output file of the recommended program.

10. A receiving apparatus according to claim 6, wherein said transmitting means transmits the output file of the recommended program to a network connected to said receiving means.

11. A receiving apparatus comprising:
receiving means for receiving a broadcasting signal in which video signals and program information signals of a plurality of programs are multiplexed;
video signal processing means for processing the video signal of a program selected from the plurality of programs and outputting the processed video signal to a display device;
program information extracting means for extracting program information from the broadcasting signal received by said receiving means;
program table generating means for generating a program table in accordance with the program information extracted by said program information extracting means and outputting data representative of the program table to the display device;
selecting means for searching the plurality of programs in accordance with a predetermined retrieval condition and selecting a recommended program in accordance with a search result;
file generating means for generating an output file of the recommended program selected by said selecting means by using the program information of the recommended program among the program information extracted by said program information extracting means; and
transmitting means for transmitting the output file of the recommended program generated by said file generating means to an external apparatus.

12. A receiving apparatus comprising:
receiving means for receiving a broadcasting signal in which information signals of a plurality of programs are multiplexed;
program information input means for inputting program information of a program selected from the plurality of programs, from an external apparatus; and
program table generating means for generating a program table in accordance with the program information input to said program information input means and outputting data representative of the program table.

13. A receiving apparatus according to claim 12, further comprising control means for judging from the program information whether said receiving means can receive the information signal of the selected program and for controlling a generation process of the program table by said program table generating means in accordance with a judgement result.

14. A receiving apparatus according to claim 13, wherein the program information includes time information representative of a broadcasting time of the selected program, and said control means controls said program table generating means to inhibit a display of a program judged that the broadcasting time is incompatible.

15. A receiving apparatus according to claim 12, wherein the program information includes service information indicating a type of broadcasting service of the selected program, and said control means controls said program table generating means to inhibit a display of a program of broadcasting service having a different type of broadcasting service receivable by the receiving apparatus.

16. A receiving apparatus according to claim 13, wherein the program information includes pay-per-view information indicating the selected program is a pay-per-view program, and said control means performs a judgement process in accordance with the pay-per-view information.

17. A receiving apparatus according to claim 13, wherein the program information includes audio-visual restriction information indicating audio-visual restriction of the selected program, and said control means performs a judgement process in accordance with the audio-visual restriction information.

18. A receiving apparatus according to claim 13, further comprising recording means for recording a received information signal, and said control means judges whether the information signal recorded in said recording means contains the information signal of the selected program, and controls a generation process of the program table.

19. A receiving apparatus according to claim 12, wherein said program information input means inputs a plurality of program information sets, and said program table generating means generates the program table containing only programs of a selected program information set among the plurality of program information sets.

20. A receiving apparatus according to claim 12, wherein said program table generating means generates a two-dimensional program table having a broadcasting time as one axis and a channel as the other axis.

21. A receiving apparatus according to claim 20, wherein said program table generating means generates the two-dimensional program table in which only the program information of the selected program is displayed in a corresponding area of the program table and the program information of other programs is inhibited to be displayed in other areas.

22. A receiving apparatus according to claim 20, wherein in the broadcasting signal, program attribute data of the plurality of programs is further multiplexed, and said program table generating means generates the program by using the program attribute data.

23. A receiving apparatus according to claim 20, wherein said program table generating means generates the program table in which a predetermined frame is multiplexed with in a predetermined area of the selected program.

24. A receiving apparatus according to claim 20, wherein said program generating means generates the program table multiplexed with a predetermined mark image in a predetermined area of the selected program in the program table.

25. A receiving apparatus according to claim 12, further comprising:
designating means for designating an arbitrary program from a plurality of programs contained in the program table; and
signal processing means for processing the information signal of a program designated by said designating means, among the information signals received by said receiving means.

26. A receiving apparatus comprising:
receiving means for receiving a broadcasting signal in which information signals of a plurality of programs are multiplexed;
information output means for outputting information of the information signal received by said receiving means;
retrieving means for retrieving a program from the plurality of programs in accordance with a predetermined condition;
program information input means for inputting program information of the program selected from a plurality of programs, from an external apparatus; and
program table generating means for generating a program table in accordance with a retrieval result by said retrieving means and the program information input to said program information input means and for outputting program table data representative of the program table.

27. An apparatus according to claim 26, wherein said program table generating means generates a two-dimensional program table having a broadcasting time as one axis and a channel as the other axis.

28. A receiving apparatus according to claim 27, wherein said program table generating means generates the program table in which only the program information of the selected program and the program information of the program selected in accordance with the retrieval result are displayed in corresponding areas of the program table and the program information of other programs is inhibited to be displayed in other areas.

29. A receiving apparatus according to claim 20, wherein said program table generating means generates the program table in which an area corresponding to the selected program and the area of the program selected in accordance with the retrieval result are displayed at different brightness.

30. A receiving apparatus according to claim 27, wherein said program table generating means generates the program table in which only information of a program coincident with a program which is selected from the selected programs according to the retrieval result is displayed in a corresponding area.

31. A receiving apparatus according to claim 27, wherein in the broadcasting signal, program attribute data of the plurality of programs is further multiplexed, and said program table generating means generates the program in which program information generated by using the program attribute data of the selected program among the program attribute data and program information of the selected program are displayed.

32. A television signal receiving apparatus, comprising:
receiving means for receiving a television broadcasting signal in which digital image signals of a plurality of programs are multiplexed;
program information input means for inputting program information of a program selected from the plurality of programs, from an external apparatus;
program table generating means for generating a program table in accordance with the program information input to said program information inputting means and displaying the program table on a display device;
designating means for designating an arbitrary program in the program table; and
image processing means for extracting a digital image signal of the program designated by said designating means from the television broadcasting signal and displaying an image of the extracted program on the display device.

33. A receiving method for a receiving apparatus comprising the steps of:
receiving a broadcasting signal in which information signals of a plurality of programs are multiplexed;
outputting information of an information signal received at said receiving step;
selecting an arbitrary program from the plurality of programs; and
transmitting program information of a program selected at said selecting step to an external apparatus.

34. A receiving method for a receiving apparatus comprising the steps of:
receiving a broadcasting signal in which video signals and program information signals of a plurality of programs are multiplexed;
processing the video signal of a program selected from the plurality of programs and outputting the processed video signal to a display device;
extracting program information from the broadcasting signal received at said receiving step;
generating a program table in accordance with the program information extracted at said program information extracting step and outputting data representative of the program table to the display device;
selecting an arbitrary recommended program from programs described in the program table;
generating an output file of the recommended program selected at said selecting step by using the program information of the recommended program among the program information extracted at said program information extracting step; and
transmitting the output file of the recommended program generated at said file generating step to an external apparatus.

35. A receiving method for a receiving apparatus comprising the steps of:
receiving a broadcasting signal in which video signals and program information signals of a plurality of programs are multiplexed;
processing the video signal of a program selected from the plurality of programs and outputting the processed video signal to a display device;
extracting program information from the broadcasting signal received at said receiving step;
generating a program table in accordance with the program information extracted at said program information extracting means and outputting data representative of the program table to the display device;
searching the plurality of programs in accordance with a predetermined retrieval condition and selecting a recommended program in accordance with a search result;
generating an output file of the recommended program selected at said selecting step by using the program information of the recommended program among the program information extracted at said program information extracting step; and
transmitting the output file of the recommended program generated at said file generating step to an external apparatus.

36. A receiving method for a receiving apparatus comprising the steps of:
receiving a broadcasting signal in which information signals of a plurality of programs are multiplexed;
inputting program information of a program selected from the plurality of programs, from an external apparatus; and
generating a program table in accordance with the program information input at said program information input step and outputting data representative of the program table.

37. A receiving method for a receiving apparatus comprising the steps of:
receiving a broadcasting signal in which information signals of a plurality of programs are multiplexed;
outputting information of the information signal received at said receiving step;
retrieving a program from the plurality of programs in accordance with a predetermined condition;
inputting program information of the program selected from a plurality of programs, from an external apparatus; and
generating a program table in accordance with a retrieval result at said retrieving step and the program information input at said program information input step and for outputting program table data representative of the program table.

38. A television signal receiving method for a television signal receiving apparatus, comprising the steps of:
receiving a television broadcasting signal in which digital image signals of a plurality of programs are multiplexed;
inputting program information of a program selected from the plurality of programs, from an external apparatus;
generating a program table in accordance with the program information input at said program information inputting step and displaying the program table on a display device;
designating an arbitrary program in the program table; and
extracting a digital image signal of the program designated at said designating step from the television broadcasting signal and displaying an image of the extracted program on the display device.

39. A recording medium storing a program of a receiving method for a receiving apparatus, said receiving method comprising the steps of:
receiving a broadcasting signal in which information signals of a plurality of programs are multiplexed;
outputting information of an information signal received at said receiving step;
selecting an arbitrary program from the plurality of programs; and
transmitting program information of a program selected at said selecting step to an external apparatus.

40. A recording medium storing a program of a receiving method for a receiving apparatus, said receiving method comprising the steps of:
receiving a broadcasting signal in which video signals and program information signals of a plurality of programs are multiplexed;
processing the video signal of a program selected from the plurality of programs and outputting the processed video signal to a display device;
extracting program information from the broadcasting signal received at said receiving step;
generating a program table in accordance with the program information extracted at said program information extracting step and outputting data representative of the program table to the display device;
selecting an arbitrary recommended program from programs described in the program table;
generating an output file of the recommended program selected at said selecting step by using the program information of the recommended program among the program information extracted at said program information extracting step; and
transmitting the output file of the recommended program generated at said file generating step to an external apparatus.

41. A recording medium storing a program of a receiving method for a receiving apparatus, said receiving method comprising the steps of:
receiving a broadcasting signal in which video signals and program information signals of a plurality of programs are multiplexed;
processing the video signal of a program selected from the plurality of programs and outputting the processed video signal to a display device;
extracting program information from the broadcasting signal received at said receiving step;
generating a program table in accordance with the program information extracted at said program information extracting means and outputting data representative of the program table to the display device;
searching the plurality of programs in accordance with a predetermined retrieval condition and selecting a recommended program in accordance with a search result;
generating an output file of the recommended program selected at said selecting step by using the program information of the recommended program among the program information extracted at said program information extracting step; and
transmitting the output file of the recommended program generated at said file generating step to an external apparatus.

42. A recording medium storing a program of a receiving method for a receiving apparatus, said receiving method comprising the steps of:
receiving a broadcasting signal in which information signals of a plurality of programs are multiplexed;
inputting program information of a program selected from the plurality of programs, from an external apparatus; and
generating a program table in accordance with the program information input at said program information input step and outputting data representative of the program table.

43. A recording medium storing a program of a receiving method for a receiving apparatus, said receiving method comprising the steps of:
receiving a broadcasting signal in which information signals of a plurality of programs are multiplexed;
outputting information of the information signal received at said receiving step;
retrieving a program from the plurality of programs in accordance with a predetermined condition;
inputting program information of the program selected from a plurality of programs, from an external apparatus; and
generating a program table in accordance with a retrieval result at said retrieving step and the program information input at said program information input step and for outputting program table data representative of the program table.

44. A recording medium storing a program of a television signal receiving method for a television signal receiving apparatus, said television signal receiving method comprising the steps of:
receiving a television broadcasting signal in which digital image signals of a plurality of programs are multiplexed;
inputting program information of a program selected from the plurality of programs, from an external apparatus;
generating a program table in accordance with the program information input at said program information inputting step and displaying the program table on a display device;
designating an arbitrary program in the program table; and
extracting a digital image signal of the program designated at said designating step from the television broadcasting signal and displaying an image of the extracted program on the display device.
